# EUROPÄISCHE PATENTSCHRIFT

(11) **EP 1 528 856 B1**
(45) Veröffentlichungstag und Bekanntmachung des Hinweises auf die Patenterteilung: **22.04.2009**
(21) Anmeldenummer: 03792225.9
(22) Anmeldetag: 23.07.2003
(51) Int. Cl.: A01N 1/02

(54) **KRYOKONSERVIERUNG MIT EINEM GAS- ODER DAMPFFÖRMIGEN KÜHLMEDIUM**
CRYOPRESERVATION BY MEANS OF A GASEOUS OR VAPOROUS COOLING MEDIUM
CRYOCONSERVATION AVEC UN AGENT DE REFROIDISSEMENT GAZEUX OU A L'ETAT DE VAPEUR

(30) Priorität: 13.08.2002 DE 10237125
(43) Veröffentlichungstag der Anmeldung: 11.05.2005
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 66386 St. Ingbert (DE); OBERGRIESSER, Frank, 66117 Saarbrücken (DE)
(74) Vertreter: Hertz, Oliver
(86) Internationale Anmeldenummer: PCT/EP2003/008055
(87) Internationale Veröffentlichungsnummer: WO 2004/017732

(56) Entgegenhaltungen:
- WO-A-02/46719
- WO-A-96/13159
- US-A- 5 780 295
- DATABASE WPI Section Ch, Week 198834 Derwent Publications Ltd., London, GB; Class D16, AN 1988-239556 XP002264515 & JP 63 173582 A (FUJI SEIKI SEIZO KK), 18. Juli 1988 (1988-07-18) & PATENT ABSTRACTS OF JAPAN vol. 12, no. 450 (C-547), 25. November 1988 (1988-11-25) & JP 63 173582 A -& JP 63 173582 A
- DATABASE WPI Section Ch, Week 198819 Derwent Publications Ltd., London, GB; Class D16, AN 1988-128936 XP002264516 & JP 63 071172 A (HOKUSAN KK), 31. März 1988 (1988-03-31) & PATENT ABSTRACTS OF JAPAN vol. 12, no. 299 (C-520), 15. August 1988 (1988-08-15) & JP 63 071172 A
- PATENT ABSTRACTS OF JAPAN vol. 12, no. 301 (C-521), 16. August 1988 (1988-08-16) & JP 63 072601 A (HOXAN)

## Beschreibung

Die Erfindung betrifft Verfahren zur Herstellung gefrorener Proben, insbesondere Verfahren zur Kryokonservierung biologischer Proben, wie z. B. zur Kryokonservierung biologischer Zellen, Zellgruppen oder Zellbestandteile, und Vorrichtungen zur Herstellung gefrorener Proben, insbesondere Kryokonservierungsvorrichtungen für biologische Proben.

Eine wichtige Aufgabe in der Biotechnologie, Medizin und Pharmakologie besteht in der Handhabung biologischer Zellen, um an diesen z. B. Messungen oder Analysen durchzuführen. Biologische Zellen sind hochempfindliche Systeme, die in der Regel im lebenden Zustand ständig sich verändernde Zustände und Eigenschaften durchlaufen. Zellen sollen nach ihrer Gewinnung z. B. durch Abnahme aus einem Organismus möglichst unverändert bleiben. Ferner soll die Handhabung, z. B. ein Sortieren der Zellen ohne Veränderung von deren Eigenschaften erfolgen können. Des Weiteren besteht ein Interesse, Zellen einzeln, in Gruppen oder nach Typen geordnet verfügbar zu halten und je nach Bedarf im Zeitverlauf bereitzustellen.

Zur Lagerung und Bereitstellung biologischer Zellen wurden verschiedene Techniken zur Kryokonservierung oder Kryofixierung entwickelt. Eine Kryokonservierung umfasst ein unverändertes Erhalten insbesondere biologischen Materials im gefrorenen Zustand. Es ist bspw. bekannt, biologische Zellen, die in einer Nährstofflösung suspendiert sind, auf kalte Oberflächen aufzusprühen, wo sie gefrieren (z.B. US 5 780 295). Diese Sprühtechnik besitzt mehrere Nachteile. Erstens werden die Zellen beim Aufsprühen in unkontrollierter Weise mechanisch belastet. Zweitens sind die konservierten Proben auf der Oberfläche unregelmäßig und nicht reproduzierbar angeordnet. Die weitere Handhabung der kryokonservierten Proben ist erschwert.

Die Anwendung der Sprühtechnik ist auf besonders kleine Probentropfen (kleiner Materialdurchsatz) und niedrigviskose Suspensionen beschränkt.

Aus WO 96/13159 ist bekannt, biologische Objekte zur Kryokonservierung in Tropfenform mit einer Mikrotropfenschusseinrichtung auf ein gekühltes Substrat aufzuschießen. Durch Verwendung der Mikrotropfenschusseinrichtung kann die Position der Kryo-proben reproduzierbar eingestellt werden. Mit dieser Technik können Kryoproben sortiert werden. Nachteilig ist jedoch wiederum die Belastung der Proben bei der Ablage auf dem Substrat und die Fixierung der Proben am Substrat, solange der gefrorene Zustand anhält. Die Kryokonservierung biologischen Materials auf gekühlten Substraten wird auch in US 4 531 373 und US 4 580 416 beschrieben.

Ein generelles Problem der herkömmlichen Kryokonservierung durch Auffrieren auf einer Oberfläche besteht darin, dass die Kryoproben im Falle einer vorübergehenden Erwärmung auf der Oberfläche keine wesentliche Formänderung erfahren. Es kann nur mit aufwendigen messtechnischen Mitteln geprüft werden, ob die Kryoprobe im Verlauf der Lagerung zeitweilig geschmolzen war. Gegenwärtig ist bei der Ablage von Kryoproben auf Oberflächen kein praktikabler Marker verfügbar, mit dem die Dauerhaftigkeit des Kryozustandes geprüft werden kann. Dies stellt ein besonderes Problem bei Langzeitanwendungen der Kryokonservierung dar, bei denen es weniger auf das vorübergehende Fixieren des Zustands einer Probe ankommt, sondern vielmehr auf eine z.B. mehrjährige Lagerung.

Es ist auch bekannt, biologische Zellen durch Immersion in einem flüssigen Kühlmedium einzufrieren (z.B. US 4 578 963). Bei dieser Technik besteht jedoch die Gefahr, dass die Proben durch das Kühlmedium kontaminiert werden. Dieses Problem besteht auch bei der Kryofixierungstechnik, die in DE-OS 39 30 605 beschrieben wird. Bei dieser Technik werden suspendierte biologische Materialien in ein flüssiges Kühlmedium eingesprüht, um besonders hohe Kühlgeschwindigkeiten zu erzielen. Die Anwendung der Sprühtechnik ist wiederum auf besonders kleine Probentropfen und auf versprühbare, d.h. niedrigviskose Suspensionen beschränkt. Des Weiteren ist an der Sprühtechnik von Nachteil, dass diese wegen der kleinen Probenvolumen mit einem geringen Materialdurchsatz verbunden ist.

Mit der Immersionstechnik werden zwar mechanische Belastungen der Proben beim Auffangen der Proben vermieden. Nachteilig ist jedoch, dass die Proben in einen Lagerbehälter ohne eine definierte Lagebeziehung fallen. Eine selektive Sammlung der gefrorenen Proben, z. B. nach bestimmten Probeneigenschaften oder Zelltypen, kann nicht erfolgen.

Aus den japanischen Patentanmeldungen JP-A-63173582, JP-A-63071172 und JP-A-63672601 ist bekannt, eine Charge an Zellen in einer Kulturflüssigkeit einem Erzeuger für kleine Partikel zu-zuführen und die entstandenen kleinen Partikel durch kontakt mit Kühlmitteldampf einzufrieren. Das Einfrieren erfolgt in einem vertikalen Fallschacht in einem Kühlmittel-Gegenstrom. Die gefrorenen Partikel werden in einem Sammelschacht gesammelt.

Die Aufgabe der Erfindung ist es, verbesserte Verfahren und Vorrichtungen zur Herstellung gefrorener Proben, insbesondere zur Kryokonservierung biologischer Proben bereitzustellen, mit denen die Nachteile herkömmlicher Kryokonservierungstechniken überwunden werden und die es insbesondere ermöglichen, einzelne Proben, insbesondere mit biologischen Zellen, Zellgruppen oder Zellbestandteilen geordnet und reproduzierbar im gefrorenen Zustand zu lagern und ggf. zu manipulieren.

Diese Aufgabe wird durch Verfahren mit den Merkmalen gemäß Anspruch 1 und Vorrichtungen mit den Merkmalen gemäß Anspruch 13 gelöst. Vorteilhafte Ausführungsformen und Anwendungen der Erfindung ergeben sich aus den abhängigen Ansprüchen.

Ein Merkmal der Erfindung ist es, die Kryokonservierung von Proben durch Abkühlung in einer Kühleinrichtung mit einem Kühlmedium und anschließender Sammlung der Proben in einer Aufnahmeeinrichtung insbesondere dahingehend weiterzuentwickeln, dass die Proben in der Kühleinrichtung durch unmittelbare Einwirkung eines gas- oder dampfförmigen Kühlmediums gefroren werden. Das Gefrieren erfolgt vorzugsweise in einem Zustand, in dem die Proben unter der Wirkung der eigenen Oberflächenspannung eine vollständige oder abgeplattete Sphäroidform bilden. Das Kühlmedium kann allseitig oder nahezu allseitig auf die Probenoberfläche einwirken, bis die Proben zumindest an ihrer Oberfläche gefroren sind. Die Proben werden zumindest auf ihrer Oberfläche gefroren. Ein vollständiges Gefrieren kann in der Aufnahmeeinrichtung folgen. Die erfindungsgemäße Kryokonservierung im Wesentlichen sphärischer Proben in gas- oder dampfförmigen Kühlmedien besitzt den Vorteile, dass erstmalig ein mechanisch schonender Einfriervorgang im schwebenden, suspendierten oder nahezu frei getragenen Zustand der Proben erfolgt. Sowohl die Lagerung der Proben, die Überprüfung der Kryobedingungen als auch die weitere Handhabung der Proben wird dadurch erheblich erleichtert.

Die Sphäroidform oder sphärische Tropfenform umfasst beispielsweise eine Form eines sphärischen Rotationskörpers (z. B. Kugelform, Ellipsoidform), der ggf. bei der Bewegung im Kühlmedium oder durch die Wirkung der Oberflächenspannung abgeplattet oder deformiert ist (z. B. Strömungsprofilform). Die sphärische Tropfenform ist, abgesehen von einer möglicherweise vorgesehenen Kontaktfläche, vollständig konvex. Die Probe bildet die Sphäroidform im entspannten und mechanisch relaxierten Zustand, in dem das Einfrieren erfolgt. Der Einfriervorgang erfolgt im wesentlichen durch Wärmeabtransport über die freie Oberfläche der Probentropfen.

Gemäß einer bevorzugten Ausführungsform der Erfindung durchlaufen die Proben von einem Tropfengenerator zu der Kühleinrichtung und/oder durch die Kühleinrichtung eine vorbestimmte Bewegungsbahn. Der Tropfengenerator ist zur unidirektionalen Tropfenabgabe eingerichtet. Diese Maßnahme kann Vorteile in Bezug auf den Aufbau der Kühleinrichtung und eine geordnete Ablage gefrorener Proben in einer Aufnahmeeinrichtung besitzen. Des weiteren werden im Vergleich zu herkömmlichen Sprühtechniken größere Tropfen und damit ein erhöhter Materialdurchsatz selbst bei Suspensionen mit erhöhter Viskosität (z. B. Blut) realisierbar.

Gemäß einer weiteren bevorzugten Ausführungsform der Erfindung kann vorgesehen sein, dass die Proben vor der Sammlung eine Ablenkeinrichtung durchlaufen, mit der einzelne Proben selektiv in verschiedene Kompartimente der Aufnahmeeinrichtung gelenkt werden können. Erfindungsgemäß wird vorgeschlagen, die Proben zunächst im fluiden Kühlmedium (gasförmig oder dampfförmig) einzufrieren und dann im gefrorenen Zustand selektiv in den Kompartimenten zu sammeln. Die Bereitstellung der Ablenkeinrichtung besitzt den Vorteil, dass eine probenspezifische Sammlung und Ablage der Proben ermöglicht wird. Die geordnet abgelegten Proben sind nicht mehr an bestimmte Substrate fixiert.

Die Proben durchlaufen die Ablenkeinrichtung entsprechend einer Ausführungsform der Erfindung nach der Abkühlung in der Kühleinrichtung. Die Kühleinrichtung bildet einen Raum, in dem das Kühlmedium und die Proben zum zumindest teilweisen Einfrieren sind. Die Ablenkung der Proben auf verschiedene Bahnen hin zu den Kompartimenten vor oder während der Abkühlung besitzt den Vorteil, dass die gefrorenen Proben nach der Ablenkung unmittelbar in die Auffangeinrichtung überführt werden können. Die Ablenkung von Proben in die verschiedenen Kompartimente nach der Abkühlung besitzt den Vorteil, dass die Kühleinrichtung mit dem Kühlmedium mit einem relativ geringeren Volumen gebildet werden kann. Des Weiteren kann vorteilhaft sein, dass die Proben im gefrorenen Zustand durch die Ablenkkräfte lediglich eine Änderung der Bewegungsrichtung, nicht jedoch eine Änderung von Probeneigenschaften erfahren.

Gemäß der Erfindung ist eine horizontale Bewegung der Proben mit einem Trägerfluid durch die Kühleinrichtung vorgesehen . Das Trägerfluid kann selbst das Kühlmedium bilden. Dadurch können sich Vorteile in Bezug auf den Aufbau der Kryokonservierungsvorrichtung ergeben.

Weitere Vorteile können sich ergeben, wenn die Proben vor oder in der Kühleinrichtung mit einem Tropfenmanipulator beeinflusst werden, um bspw. bestimmte Tropfengrößen oder Tropfenzusammensetzungen zu erzielen. Ein Tropfenmanipulator kann bspw. eine Tropfenmaske, mit der eine Probe in Teiltropfen zerlegt wird, und/oder eine Tropfenhalterung umfassen, mit der die Probe mit akustischen Kräften in der Kühleinrichtung gehaltert und einer Beschichtung unterzogen wird. Die erfindungsgemäße Kryokonservierungstechnik ermöglicht somit einen erweiterten Anwendungsbereich und eine zusätzliche Bearbeitung der Proben vor oder während der Kryokonservierung.

Gemäß einer vorteilhaften Gestaltung der Erfindung können die Proben im Tropfengenerator vorgekühlt werden. Damit kann der Gefriervorgang in der Kühleinrichtung beschleunigt werden. Dies ermöglicht einen kompakten Aufbau der Kryokonservierungsvorrichtung.

Die Vorteile der Erfindung können sich auch entfalten, wenn die Proben beim Einfrieren unter'der Wirkung der Oberflächenspannung keinen vollständigen Sphäroid mit freier Oberfläche, sondern eine abgeplattete Sphäroidform bilden. Dies ist beispielsweise bei Ablage von Probentropfen auf einer Substratoberfläche mit hydrophoben Eigenschaften der Fall. Auf der hydrophoben Oberfläche, die z.B. durch Parylene, Polykarbonat oder PTFE gebildet wird, bilden mindestens 50% des Tropfenvolumens, vorzugsweise jedoch ein größerer Anteil des Tropfenvolumens die Sphäroidform, die an der Kontaktfläche mit der Substratoberfläche eine Einschnürung aufweist. Die Kontaktfläche ist kleiner als die maximale Querschnittsfläche des Tropfens. Auch bei dieser Gestaltung kann die Abkühlung mit dem gas- oder dampfförmigen Kühlmedium erfolgen. Das Einfrieren ist wie bei schwebenden Probentropfen mechanisch schonend. Die Kontaktfläche mit der hydrophoben Oberfläche ist relativ klein (z.B. 10 % der gesamten Probenoberfläche oder weniger, z. B. 1%), so dass die gefrorenen Proben von der Oberfläche leicht abgetrennt und mit mechanischen Mitteln in eine Aufnahmeeinrichtung verschoben werden können.

Die Erfindung besitzt die folgenden weiteren Vorteile. Die erfindungsgemäße Vorrichtung ermöglicht eine quantitative Einstellung des in einer tropfenförmigen Probe enthaltenen biologischen Materials. Beispielsweise ist die Zellzahl in einem Probentropfen von einer Zelle bis zu einigen 100 000 Zellen oder mehr definiert einstellbar. Die Kryokonservierung basiert auf dem Sortieren von Festkörpern auf mechanischem oder berührungslosen Wege, wobei in jedem Falle die Eigenschaften des biologischen Materials nicht nachteilig beeinflusst werden. Die gefrorenen Proben sind reproduzierbar auf Substraten, z. B. mit Mikrostrukturen oder nanostrukturierten Oberflächen positionierbar. Die abgelegten Proben können leicht im gefrorenen Zustand aus der Aufnahmeeinrichtung entnommen werden, da sie nicht an einer Oberfläche der Aufnahmeeinrichtung anhaften. Die Erfindung ermöglicht eine einfache Langzeitlagerung und eine übersichtliche Deposition von Kryoproben, und die Vorrichtung ist automatisiert betätigbar. Die erfindungsgemäße Kryokonservierung liefert automatisch eine Temperaturkontrolle. Nach einer Langzeitlagerung muss eine gefrorene Probe in der Form vorliegen, wie sie ursprünglich beim Einfrieren gebildet wurde. Ein in der Aufnahmeeinrichtung ausgeweitetes oder an dieser anhaftendes Gebilde würde auf eine Erwärmung hinweisen.

Besondere Vorteile der Erfindung ergeben sich beim Auftauen einer Probe nach der Kryokonservierung. Gewöhnlich wird die Probe in einer Nährlösung gefroren, die auch ein Gefrierschutzmittel (Kryoprotektivum) enthält. Für ein sicheres Einfrieren wird das Kryoprotektivum mit einer bestimmten, ggf. toxischen Konzentration zugesetzt. Diese toxische Konzentration ist jedoch während der relativ kurzen Zeit vor dem Einfrieren und im kryokonservierten Zustand unkritisch. Zum Auftauen kann der Kryoprobe nun eine Nährlösung zugesetzt werden, durch die bereits während des Auftauens das Kryoprotektivum auf einen unkritischen Wert verdünnt wird. Die Nährlösung zum Auftauen kann mit der erfindungsgemäßen Technik problemlos im tiefgefrorenen Zustand in die Aufnahmeeinrichtung zugefügt werden. Eine Vermischung mit der Kryoprobe erfolgt erst beim Auftauen. Dieses schonende., selektiv wirkende Prinzip war mit herkömmlichen Konservierungstechniken nicht oder nur beschränkt realisierbar.

Ein weiterer besonderer Vorteil der Erfindung besteht in der Möglichkeit, einzelne gefrorene Proben (Tropfen) durch Tieftemperaturdeposition (Beschichtung) zum Transportschutz als Wärmeisolation oder zur Erzielung eines veränderten Mediums beim Auftauen zu umhüllen. Die Manipulierbarkeit einzelner Kryoproben war mit den herkömmlichen Kryotechniken ebenfalls nicht oder nur beschränkt möglich.

Weitere Vorteile und Einzelheiten der Erfindung werden aus der folgenden Beschreibung der beigefügten Zeichnungen ersichtlich. Es zeigen:
Fign. 1 bis 8: verschiedene Kryokonservierungs vorrichtungen (keine Ausführungsformen der Erfindung),
Fig 9: eine Ausführungsform der erfindungsgemäßen Kryokonservierungsvorrichtung,
Fign. 10 und 11: weitere Einzelheiten der Kryokonservierungsvorrichtung gemäß Figur 1 (keine Ausführungsform der erfindung),
Figur 12: weitere Einzelheiten der Kryokonservierungsvorrichtung gemäß Figur 2 (keine Ausführungsform der Erfindung),
Figur 13: Einzelheiten der Krykonservierung auf einer hydrophoben Oberfläche (keine Ausführungsform der Erfindung),
Figur 14: eine schematische Illustration der Handhabung einer Kryoprobe mit einer Kapillarspitze (keine Ausführungsform der Erfindung), und
Figur 15: eine schematische Illustration eines Kryoprobenaggregats.

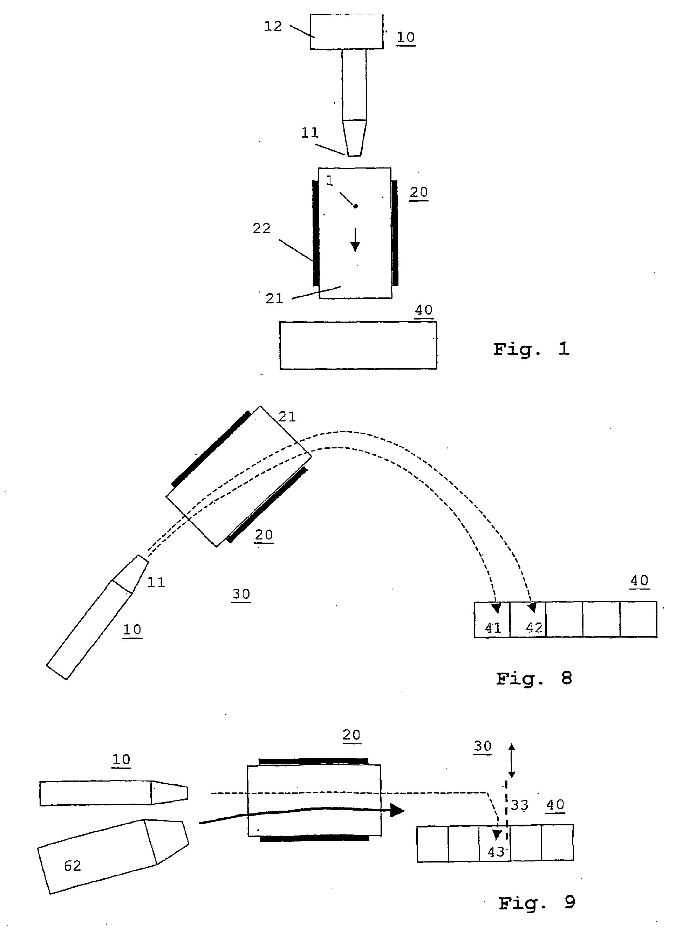

In den Figuren 1 bis 7 sind verschiedene Kryokonservierungsvorrichtungen (keine Ausführungsform der Erfindung) schematisch illustriert, bei denen mindestens eine Probe die Strecke von einem Tropfengenerator zur Aufnahmeeinrichtung im Wesentlichen vertikal unter der Wirkung der Gravitationskraft oder ggf. einer zusätzlichen Druckkraft durchläuft. Allgemein ist ein Aufbau aus einem Tropfengenerator 10, einer Kühleinrichtung 20, ggf. einer Ablenkeinrichtung 30 und einer Aufnahmeeinrichtung 40 vorgesehen. Die Komponenten 10-40 sind jeweils schematisch mit gleichen Symbolen illustriert.

Bei der Kryokonservierungsvorrichtung gemäß Figur 1 werden flüssige Proben in Tropfenform mit dem Tropfengenerator 10 abgegeben und in der Kühleinrichtung 20 mit einem gas- oder dampfförmigen Kühlmedium gefroren. Nach Durchlauf durch die Kühleinrichtung 20 werden die Proben in der Aufnahmeeinrichtung 40 gesammelt.

Der Tropfengenerator 10 besitzt mindestens eine Düse 11, die an einer Generatoreinheit 12 angebracht ist. Die Generatoreinheit 12 enthält insbesondere ein Probenreservoir, eine Steuereinrichtung zur Probenfreigabe durch die Düse 11 und ggf. einen Druckerzeuger. Die Düse 11 ist an der Generatoreinheit 12 vertikal nach unten gerichtet angeordnet. Die Düse 11 besitzt bspw. die Form eines sich verjüngenden Rohres mit einer Austrittsöffnung, deren Durchmesser bspw. 10 µm bis 5 mm beträgt.

Der Tropfengenerator 10 ist allgemein für einen unidirektionalen Betrieb ausgelegt. Dies bedeutet, dass tropfenförmige Proben, die vom Tropfengenerator 10 abgegeben werden, eine festgelegte Bewegungsrichtung besitzen. Die Bewegungsrichtung wird je nach dem Funktionsprinzip des Tropfengenerators 10 und der Ausrichtung der Düse 11 festgelegt. Der Tropfengenerator 10 wird beispielsweise durch eine Pipette, einen piezoelektrischen Tropfengeber oder einen Tropfengeber gebildet, der mit dem von Tintenstrahldruckern bekannten "Bubblejet"-Prinzip arbeitet.

Unterhalb der Düse 11 ist die Kühleinrichtung 20 angeordnet. Diese umfasst insbesondere einen Kühlraum 21, der mit einer Kühlmediumquelle 22 verbunden ist (jeweils schematisch illustriert). Der Kühlraum 21 umfasst bspw. einen Zylinder oder ein Rohr aus einem gut wärmeleitenden Material (z. B. Metall). Eine charakteristische Querschnittsdimension (z. B. Innendurchmesser) des Kühlraums 21 beträgt bspw. 0.5 bis 3 cm. Der Kühlraum 21 ist mit dem Kühlmedium gefüllt. Je nach Anwendungsfall wird als Kühlmedium bspw. Dampf des flüssigen Stickstoffs, gekühlte Luft, ein anderes gekühltes Gas, Dampf von CO₂-Eis oder Dampf von flüssigem Helium verwendet. Die Kühlmediumquelle 22 ist mit dem Kühlraum 21 verbunden und zur direkten Kühlung (Einspeisung von Kühlmedium) oder zur indirekten Kühlung (Konvektionskühlung) eingerichtet. Die Länge der durch den Kühlraum 21 gebildeten Fallstrecke beträgt je nach Volumen des Kühlraums und Art einer ggf. vorgesehenen Vorkühlung bei mobilen Geräten bspw. 10 cm bis 50 cm und bei stationären Geräten bspw. 2 m bis 10 m. Die Temperatur im Kühlraum 21 liegt im wesentlichen bei der Siede- oder Sublimationstemperatur des Kühlmittels und beträgt zum Beispiel -30°C bis -170 °C. Bei Kühlung im Dampf von flüssigem Helium kann die Temperatur wesentlich niedriger liegen (bis rd. -260 °C). Vorteilhafterweise kann dabei die Kühlstrecke wesentlich verkürzt werden.

Am Ende der Fallstrecke in der Kühleinrichtung 20 ist die Aufnahmeeinrichtung 40 vorgesehen. Diese umfasst einen Sammelbehälter, wie z.B. eine Wanne. Die Aufnahmeeinrichtung 40 ist vorzugsweise mit einem Kühlgerät ausgestattet, mit dem eine Kryokonservierungstemperatur einstellbar ist.

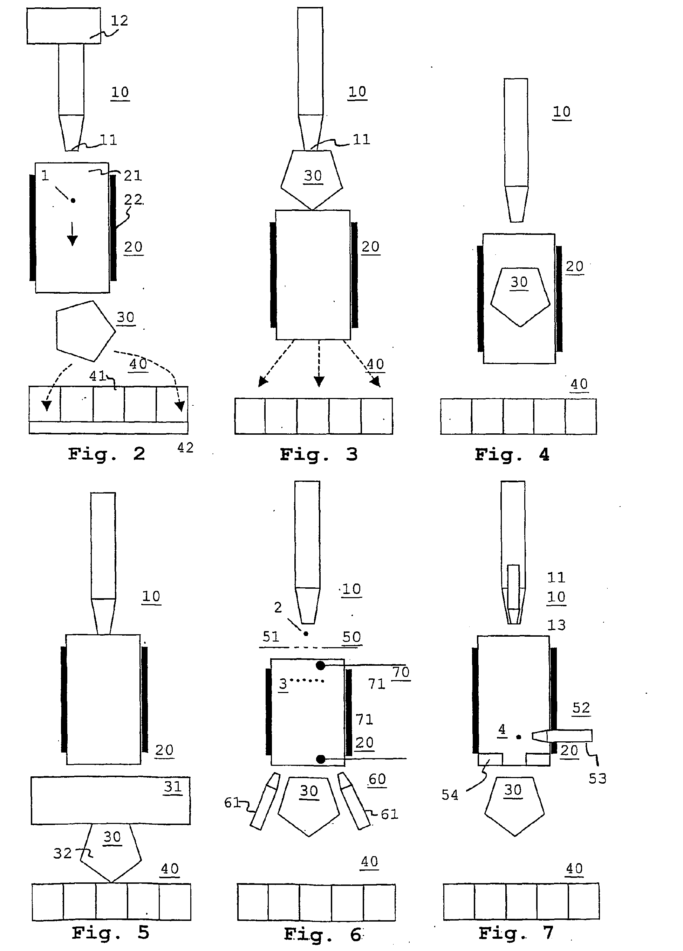

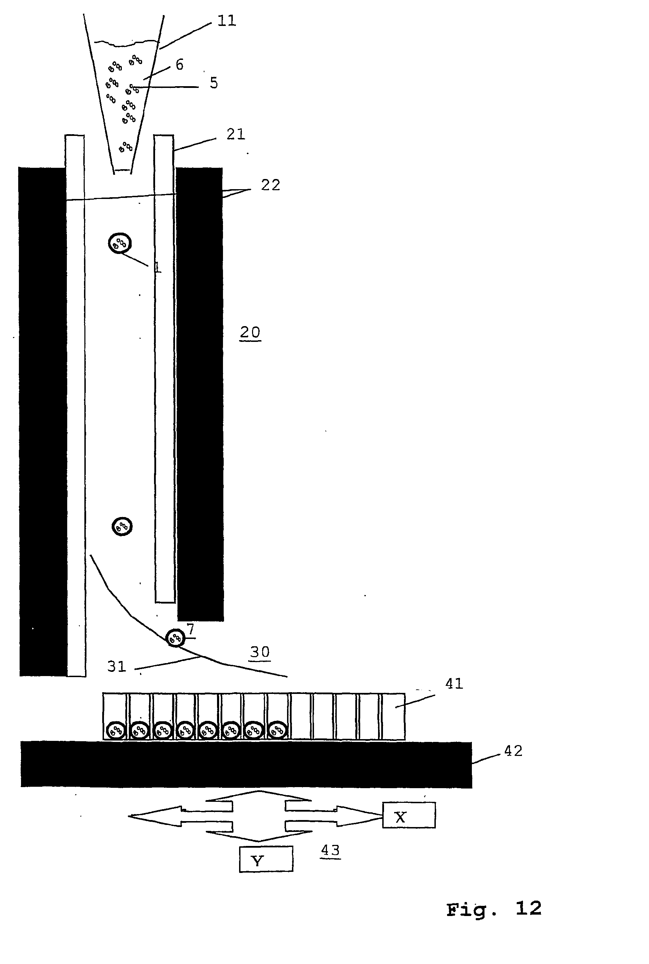

Wenn die gefrorenen Proben beispielsweise je nach ihren Eigenschaften oder in Abhängigkeit vom Betriebszustand des Tropfengenerators 10 sortiert werden sollen, kann eine Ablenkeinrichtung 30 vorgesehen sein, wie dies schematisch in den Figuren 2 bis 7 illustriert ist. Beispielsweise ist gemäß Figur 2 die Ablenkeinrichtung 30 am Ende der Fallstrecke vorgesehen. Die Ablenkeinrichtung 30 ist allgemein zur Ausübung mechanischer, elektrischer, magnetischer, akustischer und/oder optischer Ablenkkräfte auf die Proben eingerichtet, die durch die Kühleinrichtung 20 hindurchtreten. Mechanische Ablenkkräfte werden bspw. durch eine Rutsche (siehe auch Figur 12), Rolle oder Wippe oder aerodynamisch mit einem Gasstrom erzeugt. Die Stärke der Ablenkung wird bspw. durch die Neigung der Rutsche oder Rolle, die Kraft bei Betätigung der Wippe oder die Strömungsgeschwindigkeit des Gasstroms bestimmt. Elektrische oder magnetisch Ablenkkräfte werden mit elektrischen oder magnetischen Felder erzeugt. Dies ist bei sehr kleinen Proben (im Sub-µm-Bereich) vorgesehen. Zur Ausübung magnetischer Ablenkkräfte werden Proben verwendet, die magnetische Partikel enthalten. Zur Ausübung akustischer Ablenkkräfte ist die Ablenkeinrichtung 30 mit einer Ultraschallquelle ausgestattet, mit der je nach Schallamplitude Proben verschieden stark abgelenkt werden können. Schließlich kann zur Ausübung optischer Ablenkkräfte eine LaserLichtquelle vorgesehen sein, mit der die Proben wie mit einem sog. Laser-Tweezer manipuliert werden.

Die Ablenkeinrichtung 30 kann, insbesondere bei Ausübung mechanischer Ablenkkräfte, selbst gekühlt sein, um die Proben nicht zu erwärmen. Des Weiteren kann vorgesehen sein, dass die Ablenkeinrichtung 30 eine Fraktioniereinrichtung enthält, mit der gefrorene Probentropfen in Teilvolumen zerlegt werden. Dies würde vorteilhafterweise trotz der hierzu erforderlichen mechanischen Kräfte kein Problem für die meisten kryokonservierten Zellen darstellen, die in einem Probentropfen enthalten sind.

Beispielsweise würde ein Probentropfen mit einem Durchmesser von 3 mm rund 10⁵ Zellen enthalten, die bei einer Fraktionierung in beispielsweise fünf Bruchstücke zum größten Teil unbeeinflusst blieben.

Unterhalb der Ablenkeinrichtung 30 ist die Aufnahmeeinrichtung 40 mit einer Vielzahl von Kompartimenten 41 vorgesehen. Die Kompartimente 41 bilden je nach Anwendungsfall Gefäße mit Volumen im µl- bis pl-Bereich oder Strukturen, die in eine Substratoberfläche integriert sind. Allgemein ist die Aufnahmeeinrichtung 41 vorzugsweise ein Kryosubstrat, wie es an sich in Zusammenhang mit Kryokonservierungstechniken bekannt ist. Die Aufnahmeeinrichtung 40 umfasst ferner einen temperierbaren Träger 42, mit dem die Aufnahmeeinrichtung 40 relativ zum darüberliegenden Aufbau aus den Komponenten 10 bis 30 beweglich ist (siehe z.B. Figur 12).

Zur Durchführung der Kryokonservierung wird der Tropfengenerator 10 betätigt, so dass von der Düse 11 mindestens ein Probentropfen, vorzugsweise jedoch eine Folge von Probentropfen nach unten in die Kühleinrichtung 20 abgegeben wird. Jeder Tropfen bildet eine Probe 1, die zur Kryokonservierung biologischer Materialien mindestens eine Zelle, Zellgruppe oder Zellbestandteile, eine Nährstofflösung und ggf. ein Kryoprotektivum umfasst. Der Durchmesser der Probe 1 liegt im Bereich von z.B. 500 µm bis 5 mm, insbesondere bei 3 mm.

Der Tropfengenerator 10 kann mit Vorteil mit einer gekühlten Düse 11 betrieben werden. Die Vorkühlung kann bspw. so eingestellt werden, dass die Probe beim Verlassen der Düse 11 eine Temperatur unterhalb von 0°C, vorzugsweise im Bereich von -3°C bis -10°C oder darunter besitzt. Da die Probe 1 in der Regel eine salzhaltige Nährstofflösung enthält, ist die vorgekühlte Probe noch flüssig.

Im Kühlraum 21 wird die Probe 1 weiter abgekühlt. Die Abkühlung führt zu einem Einfriervorgang, der allseitig von der Oberfläche der Probe 1 ausgeht und in deren Inneres fortschreitet. Vorteilhafterweise können Einfriergeschwindigkeiten von bis zu 20°C/s erzielt werden. Alternativ können geringere Einfriergeschwindigkeiten eingestellt werden. Nach Durchlauf des Kühlraums 21 ist die Probe 1 zumindest teilweise gefroren. Dies bedeutet, dass zumindest die Oberfläche der Probe 1 gefroren ist, so dass ein nach außen festes Gebilde entsteht, auf das die Ablenkeinrichtung 30 einwirkt.

Die Ablenkeinrichtung 30 wird so betätigt, dass Proben in vorbestimmter Weise in einzelne Kompartimente 41 abgelenkt werden (siehe zum Beispiel gestrichelte Pfeile). Beispielsweise werden Proben nach ihren Eigenschaften sortiert (siehe auch Figur 6) oder in bestimmten quantitativen Verhältnissen in die Kompartimente 41 gefüllt. Diese Einstellung bestimmter Mengenverhältnisse in den Kompartimenten kann für Anwendungen bei der Zellkultivierung oder beim sog. Tissue Engineering von Vorteil sein.

Gemäß den Figuren 3 und 4 können Kryokonservierungsvorrichtungen dahingehend abgewandelt sein, dass die Ablenkeinrichtung 30 zwischen der Düse 11 und der Kühleinrichtung 20 (Figur 3) oder in der Kühleinrichtung 20 angeordnet ist. Im letzteren Fall kann sich vorteilhafterweise ein kompakterer Aufbau der Vorrichtung ergeben. Im Übrigen können die Komponenten 10 bis 40 und deren Teile aufgebaut sein, wie dies oben unter Bezug auf die Figuren 1 und 2 beschrieben wurde.

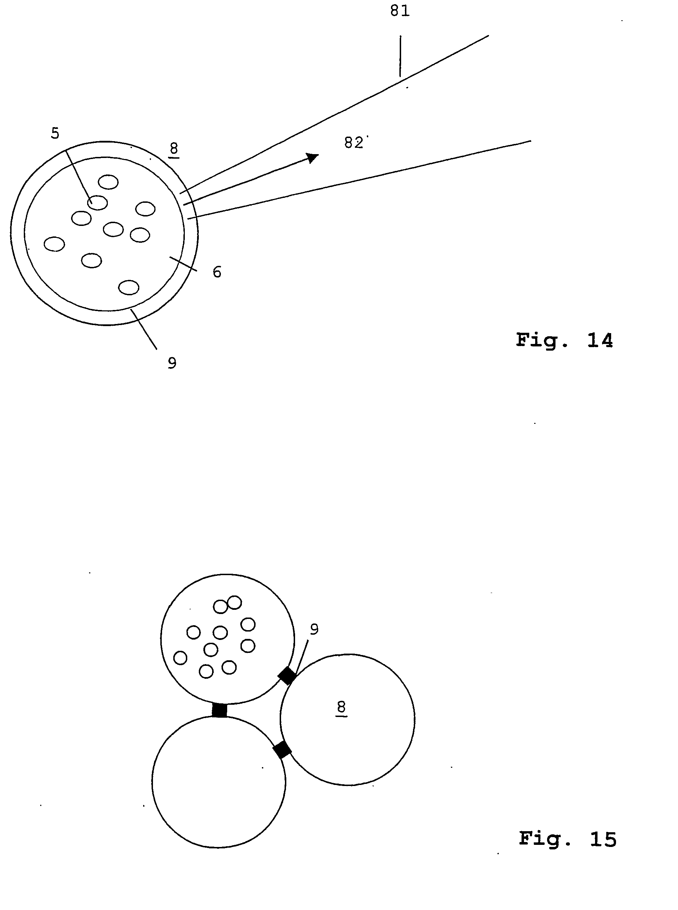

Figur 5 illustriert eine weitere Abwandlung, bei der die Ablenkeinrichtung 30 einen Sammelbehälter 31 und einen Sortierer 32 umfasst. Bei dieser Ausführungsform dient der Sammelbehälter 31 als Depot, in dem die Proben nach dem Einfriervorgang in der Kühleinrichtung 20 zunächst gemeinsam fallen. Aus dem Sammelbehälter 31 werden die Proben mit dem Sortierer 32 in die Kompartimente der Aufnahmeeinrichtung 40 überführt. Der Sortierer arbeitet vorzugsweise auf einem mechanischen Sortierprinzip. Es ist bspw. ein Rüttelsieb vorgesehen, mit dem gefrorene Proben je nach Größe aus dem Sammelbehälter 31 in die Aufnahmeeinrichtung 40 überführt werden. Alternativ kann der Sortierer 32 durch ein Kapillarwerkzeug (siehe auch Figur 14) gebildet werden, mit dem gefrorene Proben einzeln oder in Gruppen in die Aufnahmeeinrichtung überführt werden.

Eine Kryokonservierungsvorrichtung kann des Weiteren gemäß den Figuren 6 und 7 mit einem Tropfenmanipulator 50, einem Strömungsgenerator 60 und/oder einer Detektoreinrichtung 70 ausgestattet sein. Diese Komponenten dienen insbesondere der weiteren Gestaltung oder Analyse der Kryoproben während des Kühlvorgangs und/oder der selektiven, geordneten Ablage in der Aufnahmeeinrichtung.

Der Tropfenmanipulator 50 umfasst eine Tropfenmaske 51 und/oder eine Depositionseinrichtung 52. Die Tropfenmaske 51 bildet in der Bewegungsbahn der Probe von der Düse 11 zur Kühleinrichtung 20 ein teildurchlässiges mechanisches Hindernis, z. B. in Form von mindestens einem Steg, mindestens einer Kante oder einem Netz. Die Tropfenmaske 51 kann verschiedene Funktionen einzeln oder in Kombination erfüllen. Erstens kann sie der Zerlegung eines zunächst gebildeten Tropfen 2 in eine Vielzahl einzelner Tropfen 3 dienen, wie es in der unveröffentlichten deutschen Patentanmeldung DE 101 29 243.0 beschrieben ist. tens kann die Tropfenmaske 51 einer weiteren Vorkühlung der Proben dienen. Durch Berührung der Tropfenmaske, die zusätzlich gekühlt ist, kann den Proben Wärme entzogen werden, so dass sie bei Eintritt in die Kühleinrichtung 20 eine Temperatur geringfügig über dem jeweiligen Gefrierpunkt besitzen. Drittens ist es möglich, dass die Tropfenmaske 51 als Ablenkeinrichtung arbeitet. Die einzelnen Proben 3 können so auf getrennte Flugbahnen umgelenkt werden, dass sie in verschiedene Kompartimente der Aufnahmeeinrichtung 40 fallen. In diesem Fall kann ggf. die Ablenkeinrichtung 30 weggelassen werden.

Der Strömungsgenerator 60 (Figur 6) dient einem Abbremsen der mindestens einen Probe 3 in der Kühleinrichtung 20. Der Strömungsgenerator 60 umfasst eine oder mehrere Düsen 61, mit denen ein Gasstrom durch die Kühleinrichtung 20 aufwärts geströmt wird. Der Gasstrom umfasst das fluide Kühlmedium, das auch zur Kühlung der Proben verwendet wird. Mit dem

Strömungsgenerator 60 können vorteilhafterweise die Fallgeschwindigkeiten der Proben bis zum Stillstand vermindert werden. Der Strömungsgenerator 60 kann ferner die Funktion der o. g. Ultraschallhalterung 54 zur Positionierung von Proben vor einer Beschichtungsquelle übernehmen. Mit dem Strömungsgenerator 60 kann ferner ein kühlender Gasgegenstrom gebildet werden.

An der Kühleinrichtung 20 kann die Detektoreinrichtung 70 vorgesehen sein, die schematisch in Figur 6 illustriert ist. Die Detektoreinrichtung 70 umfasst einen oder mehrere Sensoren 71, 72, wie z. B. Lichtschranken zur Erfassung der Anwesenheit oder der Größe von Probentropfen.

Die Depositionseinrichtung 52 (Figur 7) kann zur zusätzlichen Beschichtung der Probe 4 in der Kühleinrichtung 20 vorgesehen sein. Die Depositionseinrichtung 52 umfasst eine Beschichtungsquelle 53 mit einer Düse, durch die Beschichtungsmaterial auf die Probe 4 gesprüht werden kann. Das Beschichtungsmaterialkann auch als Gas eingeführt werden, das sich auf der Probenoberfläche als Kondensat niederschlägt. Zur zielgenauen Beschichtung wird die Probe 4 in Höhe der Beschichtungsquelle 53 mit einer Ultraschallhalterung 54 zeitweilig festgehalten (schwebend gehalten). Die Ultraschallhalterung 54 umfasst einen an sich bekannten Ultraschalllevitator, mit dem stehende Wellen erzeugt werden, in deren Knoten sich jeweils Proben anordnen können. Als Beschichtungsquelle 53 ist bspw. eine piezoelektrisch betriebene Dosiereinrichtung vorgesehen. Es können alternativ mehrere Beschichtungsquellen oder Düsen an der Kühleinrichtung 20 vorgesehen sein. Der Strömungsgenerator und die Depositionseinrichtung können funktionell kombiniert als eine gemeinsame Komponente bereitgestellt werden.

Gemäß Figur 7 kann der Tropfengenerator 10 vorteilhafterweise mit einer Mehrfachdüse 11, 13 ausgestattet sein. Die Mehrfachdüse enthält eine innere Düse 11 zur Bereitstellung von Proben entsprechend den oben beschriebenen Prinzipien. Die äußere, koaxial angeordnete Düse 13 dient der zusätzlichen Zuführung einer Umhüllungsflüssigkeit. Mit dieser wird beim Einfrieren in der Kühleinrichtung 20 bspw. eine zusätzliche Außenschicht 9 erzeugt, wie dies in Figur 14 illustriert ist.

Die Umsetzung der erfindungsgemäßen Kryokonservierung ist nicht an eine ausschließlich vertikale Probenbewegung gebunden. Dies ist schematisch in den Figuren 8 und 9 illustriert. Gemäß Figur 8 sind die Düse 11 des Tropfengenerators 10 und der Kühlraum 21 der Kühleinrichtung 20 geneigt, ausgerichtet und angeordnet, dass die Proben gekrümmte Bewegungsbahnen bilden können. Die Proben werden vom Tropfengenerator 10 unter Druck z. B. unter einem Winkel von 45° schräg nach oben geschossen, so dass sie einer ballistischen Flugbahn folgen (keine Ansführungs form der Erfindung). Vorteilhafterweise kann in diesem Fall eine Sortierung der Kryoproben nach der Tropfengröße oder -masse erfolgen. Größere Tropfen fliegen bei gleichem Betriebsdruck des Tropfengenerators 10 eine geringere Strecke als kleinere Tropfen, so dass sie entsprechend in verschiedenen Kompartimenten, z. B. 41, 42 der Aufnahmeeinrichtung 40 landen. Bei dieser Ausführungsform wird die Ablenkeinrichtung 30 durch (nicht dargestellt) mechanische Stelleinrichtungen zur Einstellung der Neigung der Düse 11 und der Kühleinrichtung 20 gebildet (keine Ansführungs form der Erfindung).

Gemäß Figur 9 erfolgt erfindungsgemäß eine horizontale Bewegung von Proben von dem Tropfengenerator 10 durch die Kühleinrichtung 20 zur Aufnahmeeinrichtung 40. Zur Einstellung der Bewegungsbahn (gestrichelte Linie) ist eine Düse 62 vorgesehen, aus der ein Trägerfluid ausströmt (Pfeil), das ein Absinken von Proben verhindert. Das Trägerfluid ist vorzugsweise mit dem Kühlmedium in der Kühleinrichtung 20 identisch. Alternativ kann ein flüssiges Trägerfluid vorgesehen sein. Die Ablenkeinrichtung 30 umfasst eine Vielzahl von Barrieren, von denen beispielhaft nur eine Barriere 33 beim Kompartiment 43 illustriert ist. Jede Barriere 33 umfasst eine Wand oder einen vom Kühlmedium durchströmbaren Gegenstand (z. B. ein Netz), mit dem gefrorene Proben aus der Bewegung vom Trägerfluid in das Kompartiment 43 ablenkbar sind. Die Barriere 33 ist bspw. entsprechend dem Doppelpfeil beweglich. Die Funktion der Barrieren kann alternativ durch zusätzliche Gasströme zum Auslenken von Kryoproben in die Kompartimente gebildet werden.

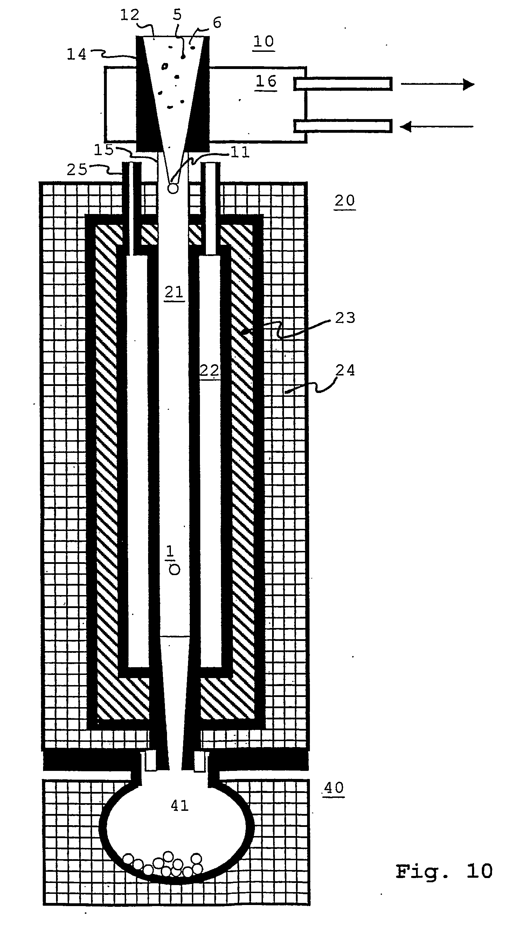

Die Figuren 10 bis 12 illustrieren verschiedene Kryokonservierungseinrichtungen, die je nach Anwendung (z.B. mobil oder stationär) oder Aufgabe verschieden aufgebaut sein können. Beispielsweise ist die Vorrichtung gemäß Figur 10 besonders vorteilhaft als mobiles Gerät, z.B. in der Sammlung von Zellen in der klinischen Medizin oder in der Viehwirtschaft (Veterinärmedizin) anwendbar.

Die Kryokonservierungsvorrichtung gemäß Figur 10 umfasst den Tropfengenerator 10, die Kühleinrichtung 20 und die Aufnahmeeinrichtung.40 (siehe schematischer Aufbau in Figur 1). Der Tropfengenerator 10 umfasst eine Düse 11 (z.B. Pipettenspitze), die mit einem Trichter 12 verbunden ist. Im Trichter 12 ist eine Suspension 6 (Nährstofflösung, Kryoprotektivum) mit biologischem Material 5 (z.B. Zellen) angeordnet. Der Trichter 12 sitzt in einer Fassung 14, an deren unteren Ende ein Fallrohr 15 befestigt ist, das durch die Kühleinrichtung 20 ragt. Der Tropfengenerator 10 kann des Weiteren mit der schematisch illustrierten Vorkühleinrichtung 16 ausgestattet sein, mit der eine Thermostatierung oder Vor kühlung bei der Tropfenerzeugung erfolgt. Die Vorkühleinrichtung 16 kann mit kaltem Wasser oder bereits mit flüssigem Stickstoff betrieben werden.

Die Kühleinrichtung 20 umfasst den Kühlraum 21, der durch das Fallrohr 15 umgrenzt wird, und die Kühlmediumquelle 22. Die Kühlmediumquelle 22 ist ein Behälter für flüssigen Stickstoff, der das Fallrohr 15 umgibt. Die Kühlmediumquelle 22 ist nach Art eines Dewar-Gefässes mit einem Vakuummantel 23 und Isoliermaterial 24 thermisch von der Umgebung isoliert. Die Kühlmediumquelle 22 ist mit mindestens einem Verbindungsrohr 25 ausgestattet, über das flüssiger Stickstoff in den Behälter einfüllbar oder Stickstoffdampf austreten kann.

Die Aufnahmeeinrichtung 40 umfasst ein einzelnes Kompartiment 41, das als Aufnahmebehälter für die Kryoproben dient. Das Kompartiment 41 wird beispielsweise mit festem Kohlendioxid oder einem weiteren Vorrat aus flüssigem Stickstoff gekühlt und gegenüber der Umgebung mit Isolationsmaterial thermisch isoliert.

Zum mobilen Einsatz in der Medizin oder Tiermedizin wird beispielsweise eine Blutprobe suspendiert und in den Trichter 12 eingeführt. Von der Düse 11 löst sich eine Tropfenfolge. Die herabfallenden Tropfen 1 gefrieren auf ihrem Weg durch das Fallrohr, das beispielsweise eine Länge von 50 cm besitzt. In diesem Fall ist das gasförmige Kühlmedium die durch Konvektion und Wärmeaustausch mit der Kühlmediumquelle 22 gekühlte Luft im Kühlraum 21. Die gefrorenen Kryoproben werden in Sphäroidform (z. B. im wesentlichen Kugelform) im Kompartiment 41 gesammelt. Wenn die gesamte Suspension durchgelaufen ist, kann das Kompartiment 41 von der Kühleinrichtung 20 getrennt (z.B. abgeschraubt), verschlossen und einer weiteren Nutzung zugeführt werden. Es kann beispielsweise eine Verschickung im gekühlten Zustand erfolgen. Für ein störungsfreies Gefrieren des fallenden Tropfens 1 muss das Fallrohr vertikal ausgerichtet sein, so dass der Tropfen nicht die Wand des Fallrohrs 15 berührt. Die Ausrichtung erfolgt je nach Art eines verwendeten Haltegestells z.B. mit einer Wasserwaage oder durch Selbstjustierung. Als Haltegestell kann beispielsweise ein Dreibein verwendet werden, in dessen Mitte die Kryokonservierungsvorrichtung an einem einzelnen Punkt aufgehängt ist, so dass sie lotrecht vertikal ausgerichtet ist.

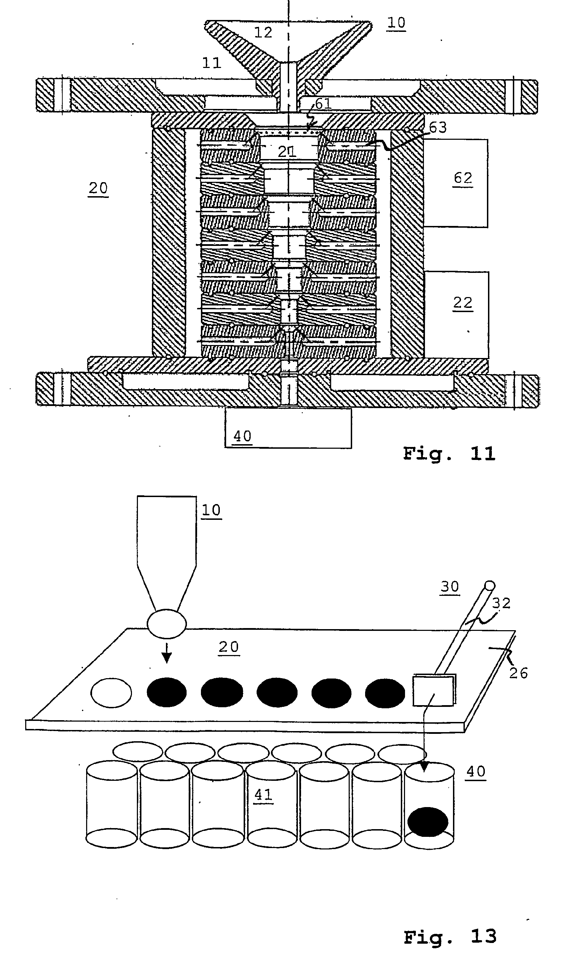

Eine alternative Kryokonservierungsvorrichtung mit einem Tropfengenerator 10, einer Kühleinrichtung 20 und einer Aufnahmeeinrichtung 40 ist in Figur 11 in schematischer Schnittdarstellung gezeigt. Die Kryokonservierungsvorrichtung gemäß Figur 11 ist ebenfalls für den mobilen oder stationären Einsatz geeignet.

Der Tropfengenerator 10 umfasst gemäß Figur 11 eine Düse 11 (z.B. geformt wie eine Pipettenspitze) und einen Trichter 12 zur Aufnahme einer Suspension mit dem biologischen Material. An der Oberseite der Kühleinrichtung 20 kann eine Heizeinrichtung vorgesehen sein, mit der ein Einfrieren der Düse 11 verhindert wird.

Die Kühleinrichtung 20 umfasst einen Kühlraum 21, der aus einer Vielzahl zylinderförmiger Segmente zusammengesetzt ist, deren Durchmesser sich im Verlauf der vertikal gebildeten Fallstrecke nach unten hin verringert. Die Kühlmediumquelle 22 wird durch ein Reservoir für flüssigen Stickstoff gebildet, das gemäß einer ersten Variante in thermischem Kontakt mit dem Körper der Kühleinrichtung 20 steht. Dieser besteht aus einem Material mit hoher Wärmeleitung, z.B. Kupfer. Gemäß einer zweiten Variante kann eine direkte Kühlung z. B. mit Dampf des flüssigen Stickstoffs erfolgen, indem der Dampf in den Kühlraum 21 geleitet wird.

Die Kühleinrichtung 20 ist ferner mit einem Strömungsgenerator ausgestattet (siehe Figur 6), der eine Druckgasquelle 62 und eine Vielzahl von Düsen 61 aufweist, die ringförmig an den Segmenten des Kühlraums 21 angebracht sind. Aus Übersichtlichkeitsgründen sind die Düsen 61 nur beim obersten Segment gezeigt. Von der Druckgasquelle 62 wird über Düsenleitungen 63 ein Träger- oder Prozessgas zu den Düsen 61 geleitet. Die Düsenleitungen 63 sind im Körper der Kühleinrichtung 20 gebildet, so dass das Träger- oder Prozessgas in den Düsenleitungen 63 gekühlt wird und zum Einfriervorgang beiträgt. Mit der Druckgasquelle 62 wird beispielsweise als inertes Trägergas Stickstoff bei Raumtemperatur und einem erhöhten Druck (z.B. 50 mbar bis 100 mbar) bereitgestellt.

Durch die Düsen 61 des Strömungsgenerators wird im Kühlraum 21 ein nach oben gerichteter Gegenstrom gebildet, der vorteilhafterweise ein Strömungsprofil besitzt. Am äußeren Rand der Segmente ist die Strömungsgeschwindigkeit besonders hoch, während entlang der mittleren Achse des Kühlraums 21 eine geringere Gegenstromgeschwindigkeit herrscht.

In den oberen Segmenten wird ein stärkerer Gegenstrom als in den unteren Segmenten eingestellt. Dieser bewirkt erstens eine starke Abkühlung der tropfenförmigen Proben. Wenn an der Düse 11 Tropfen mit einer Größe abgegeben wurden, für die ein Gefrieren beim Durchlauf der Kühleinrichtung nicht sichergestellt ist, ergibt sich zweitens durch den Gegenstrom die zusätzliche Wirkung, dass die Tropfen in kleinere Teiltropfen zerfallen.

Gemäß einer abgewandelten Variante kann der Strömungsgenerator 60 auch aus zwei Teilsystemen bestehen. Das erste Teilsystem erzeugt in den oberen Segmenten den Gegenstrom. Das zweite Teilsystem bildet eine Depositionseinrichtung (siehe Figur 7). Beispielsweise kann im untersten Segment des Kühlraums 21 als Prozessgas CO₂ eingeführt werden, das auf den gefrorenen Probenkugeln kondensiert und gefriert. Es wird eine CO₂-Beschichtung erzielt, die einer zusätzlichen Qualitätssicherung bei der Überwachung der Lagerungsbedingungen dient.

Ferner ist es möglich, die Ausrichtung der Düsen 61 relativ zur vertikalen Mittelachse des Kühlraums 21 verschieden steil auszubilden, um dem Gegenstrom in den verschiedenen Teilen des Kühlraums 21 verschieden starke Wirkungen zu verleihen.

Die am Ende der Fallstrecke angeordnete Aufnahmeeinrichtung 40 umfasst mindestens ein Kompartiment 41 und ist vorzugsweise abtrennbar und verschließbar am unteren Ende der Kühleinrichtung 20 angebracht.

Figur 12 zeigt eine Kryokonservierungsvorrichtung, wie sie dem schematischen Aufbau gemäß Figur 2 entspricht, mit weiteren Einzelheiten. Die Düse 11 mit einem flüssigen Probenreservoir aus biologischem Material 5 und Suspension 6 (Nährstofflösung, Kryoprotektivum) ragt bei dieser Gestaltung in die Kühleinrichtung 20 hinein. Der Kühlraum 21 wird durch ein oben und unten offenes Rohr gebildet. Die Kühlmediumquelle 22 ist auf der Außenseite des Rohres angeordnet. Die Kühlung der Probe 1 erfolgt ausschließlich konvektiv über das im Rohr befindliche Gas (z. B. Luft). Die Ablenkeinrichtung 30 wird durch eine mechanische Rutsche 31 am unteren Endes des Kühlraums 21 gebildet. Die Rutsche 31 ist mit einer (nicht dargestellten) mechanischen Stelleinrichtung so verstellbar, dass eine auf ihr abrollende Kryoprobe 7 jeweils in einem vorbestimmten Kompartiment 41 der Aufnahmeeinrichtung 41 landet.

Die Aufnahmeeinrichtung 40 umfasst ferner den temperierbaren Träger 42, der eine Halterung für die Kompartimente 41 bildet, und eine Steuereinrichtung 43 zur Bewegung der Aufnahmeeinrichtung 40 relativ zur Kühleinrichtung 20. Die Stelleinrichtung 43 kann mit der Stelleinrichtung der Rutsche 33 zusammenwirken, um das geordnete Ablegen von Kryoproben in bestimmten Kompartimenten 41 sicherzustellen. Die Stelleinrichtung 43 kann ferner zur Rotation der Aufnahmeeinrichtung 40 um eine vertikale Achse eingerichtet sein. Der Träger 42 kann einen Heiz- oder Kühltisch bilden, der die weitere Kühlung der geordnet abgelegten Kryoproben oder nach einer Lagerung ein definiertes Auftauen ermöglicht.

Die Kompartimente 41 sind bspw. die Reservoire einer gekühlten Mikro- oder Nanotiterplatte, die mit dem Träger 42 temperierbar ist. Alternativ können die Kompartimente 41 und der Träger 42 integral als strukturiertes Substrat gebildet sein, auf dem die Probenablage erfolgt.

Es kann eine Modifizierung der inneren Oberflächen der Kompartimente 41 vorgesehen sein, um ein Anhaften der gefrorenen Proben zu vermindern oder auszuschließen. Vorteilhafterweise können dann die Proben leichter aus den Kompartimenten 41 entnommen werden. Die Oberflächenmodifizierung umfasst bspw. die Aufbringung einer molekularen Schicht aus einer Substanz, die beim Auftauen hydrophob ist, oder einer Nano- oder Mikrostrukturierung.

Figur 13 zeigt eine Kryokonservierungsvorrichtung, mit der gefrorene Probentropfen mit einer abgeplatteten Sphäroidform hergestellt werden. Die Kryokonservierungsvorrichtung umfasst entsprechend den oben erläuterten Prinzipien einen Tropfengenerator 10, eine Kühleinrichtung 20, eine Ablenkeinrichtung 30 und eine Aufnahmeeinrichtung 40. Im Unterschied zu den oben erläuterten Varianten besitzt die Kühleinrichtung 20 ein plattenförmiges Substrat 26 mit einer hydrophoben Oberfläche. Der Halbraum über dem Substrat 26 bildet den Kühlraum, in den von einer Kühlmediumquelle (nicht dargestellt) das gas- oder dampfförmige Kühlmedium geleitet wird. Die Ablenkeinrichtung 30 wird durch ein mechanisches Werkzeug, z.B. einen mechanischen Schieber 32 gebildet.

Zur Kryokonservierung von Suspensionsproben werden mit dem Tropfengenerator 10 auf der Oberfläche des Substrats 26 einzelne Tropfen abgelegt. Wegen der hydrophoben Oberfläche behalten die Tropfen unter der Wirkung der eigenen Oberflächenspannung im Wesentlichen eine Sphäroidform bei. Lediglich im Bereich der Kontaktfläche mit der Oberfläche des Substrates 26 ist eine Abplattung gebildet. Unter der Wirkung des Kühlmediums gefrieren die Suspensionstropfen im ruhenden, entspannten Zustand. Anschließend werden die gefrorenen Proben mit der Ablenkeinrichtung 30 an die verschiedenen Kompartimente 41 der Aufnahmeeinrichtung 40 überführt.

Die in Figur 13 illustrierte Variante besitzt eine Reihe von besonderen Vorteilen. So kann die Funktion der Kühleinrichtung (direkte Kühlung mit Kühlmedium) mit einer Kühlung durch das Substrat 26 kombiniert werden. Die Proben werden auch dann durch unmittelbare Einwirkung des Kühlmediums (z. B. Luft) in einem Zustand gefroren, in dem die Proben unter der Wirkung der eigenen Oberflächenspannung eine abgeplattete Sphäroidform bilden. Eine Fallstrecke wie bei den oben beschriebenen Ausführungsformen kann vermieden werden. Den Probentropfen können noch vor dem Gefrieren Zusatzstoffe beigefügt werden. Dies erfolgt beispielsweise mit einem piezoelektrischen Dosiersystem. Als Zusatzstoff wird beispielsweise als Kryoprotektivum konzentriertes DMSO (Dimethylsulfoxid) zugesetzt. Ein weiterer Vorteil besteht in der geringen Kontaktfläche zwischen gefrorener Probe und Substrat 26, die ein Trennen vom Substrat erleichtert.

Die in Figur 13 illustrierte Variante kann in Bezug auf die Gestalt des Substrats 26 modifiziert werden. Als Substrat kann eine Düsenplatte mit einer regelmäßigen Anordnung von Gasaustrittsdüsen vorgesehen sein, durch die ein gasförmiges Trägerkissen für die Probentropfen gebildet wird. Auf dem Trägerkissen erfolgt die Kryokonservierung unter Einwirkung eines gas- oder dampfförmigen Kühlmediums. Das Kühlmedium kann ebenfalls über die Düsenplatte eingeleitet werden.

Figur 14 illustriert ein Beispiel für den Transport und die Manipulation einer gefrorenen Probe 8 mit einem Kapillarwerkzeug 80. Die Probe 8 umfasst einen Flüssigkeitstropfen mit biologischem Material 5 und einer Suspensionsflüssigkeit 6 (Nährstofflösung, Kryoprotektivum), die jeweils gefroren sind. Bei Bildung einer mehrkomponentigen Probe ist des Weiteren eine äußere Beschichtung 9 vorgesehen. Die Beschichtung 9 umfasst eine Umhüllung zur Immobilisierung der Probe nach dem Auftauen, z. B. aus einem Alginat oder Chelat, wie dies aus der Implantationsmedizin bekannt ist.

Das Kapillarwerkzeug 80 umfasst eine Kapillare 81 mit einem Hohlraum 82, der mit einem Unterdruck beaufschlagt werden kann. Unter der Wirkung des Unterdrucks wird die Probe 8 am Ende der Kapillare 81 festgehalten. Das Kapillarwerkzeug 80 erlaubt eine zielgenaue Aufnahme und Ablage von Proben insbesondere in automatisierten Geräten. Die gefrorene Probe 8 kann mit Vorteil durch eine Atmosphäre mit einer vorbestimmten chemischen Zusammensetzung bewegt werden, um das Objekt durch Sublimation des Beschichtungsmaterials 9 in die Atmosphäre oder durch Deposition von Materialien aus der Atmosphäre auf die Oberfläche der Probe 8 zu verändern. Damit können durch Abscheiden von Material auf der Probenoberfläche ein weiterer Schutz für den Transport oder bestimmte mechanische Eigenschaften nach dem Auftauen erzielt werden.

Figur 15 illustriert, dass mit der erfindungsgemäßen Kryokonservierungsvorrichtung gefrorene Probentropfen 8 direkt oder über eine Koppelflüssigkeit 10 zu Aggregaten verknüpft werden können. Die Aggregate werden bspw. in der Kühleinrichtung oder in Kompartimenten 41 der Aufnahmeeinrichtung gebildet. Diese Kopplungen ermöglichen vorteilhafterweise die Festlegung von bestimmten Zellkombinationen.

## Patentansprüche

1. Verfahren zur Herstellung gefrorener Proben (1-9), insbesondere für die Kryokonservierung biologischer Proben, mit den Schritten:
- Bereitstellung von flüssigen Proben mit einem Tropfengenerator (10),
- Abkühlung der Proben in einem Kühlraum (21) einer Kühleinrichtung (20) mit einem Kühlmedium, bis die Proben zumindest an ihrer Oberfläche gefrieren, und
- Sammlung der Proben in einer Aufnahmeeinrichtung (40), wobei
- die Proben in der Kühleinrichtung (20) mit einem gas- oder dampfförmigen Kühlmedium gefroren werden,
**dadurch gekennzeichnet, dass**
- die Proben horizontal mit einem Trägerfluid, das aus einer Düse (62) in den Kühlraum (21) ausströmt und das ein Absinken der Proben verhindert, durch den Kühlraum (21) der Kühleinrichtung (20) bewegt werden.

2. Verfahren nach Anspruch 1, bei dem die Proben vom Tropfengenerator (10) entlang einer vorbestimmten Bewegungsbahn zu der und/oder durch die Kühleinrichtung (20) bewegt werden.

3. Verfahren nach Anspruch 1 oder 2, bei dem die Proben vor der Sammlung eine Ablenkeinrichtung (30) durchlaufen, mit der die Proben in verschiedene Kompartimente (41) der Aufnahmeeinrichtung (40) gelenkt werden.

4. Verfahren nach Anspruch 3, bei dem die Proben in der Ablenkeinrichtung (30) mechanischen, elektrischen, magnetischen, akustischen und/oder optischen Ablenkkräften ausgesetzt werden.

5. Verfahren nach Anspruch 3 oder 4, bei dem die Proben die Ablenkeinrichtung (30) nach der Abkühlung durchlaufen.

6. Verfahren nach einem der vorhergehenden Ansprüche, bei dem in der Kühleinrichtung (20) auf die Proben mit einer Beschichtungseinrichtung (52) eine Beschichtung aufgetragen wird.

7. Verfahren nach einem der vorhergehenden Ansprüche, bei dem die flüssigen Proben vor der Abkühlung mit einem Tropfenmanipulator (50) in Teiltropfen zerlegt werden.

8. Verfahren nach einem der vorhergehenden Ansprüche, bei dem mit dem Tropfengenerator (10) mehrkomponentige Tropfen erzeugt werden.

9. Verfahren nach einem der vorhergehenden Ansprüche, bei dem die Proben biologische Zellen, Zellgruppen, Zellbestandteile oder biologische Makromoleküle enthalten.

10. Verfahren nach einem der vorhergehenden Ansprüche, bei dem als Kühlmedium Dampf des flüssigen Stickstoffs verwendet wird.

11. Verfahren nach einem der vorhergehenden Ansprüche, bei dem die Proben im Tropfengenerator (10) vorgekühlt werden.

12. Verfahren nach einem der vorhergehenden Ansprüche, bei dem die Proben unter der Wirkung der eigenen Oberflächenspannung eine sphärische Tropfenform bilden.

13. Vorrichtung zur Herstellung gefrorener Proben (1-9), insbesondere Kryokonservierungsvorrichtung für biologische Proben, die umfasst:
- einen Tropfengenerator (10) zur Bereitstellung von flüssigen; tropfenförmigen Proben,
- eine Kühleinrichtung (20), mit der die Proben abkühlbar sind, bis zumindest die Oberfläche der Probe gefriert, und
- eine Aufnahmeeinrichtung (40) zur Sammlung der gefrorenen Proben, wobei
- die Kühleinrichtung (20) einen Kühlraum (21) zur Aufnahme eines gas- oder dampfförmigen Kühlmediums und der Proben aufweist,
**dadurch gekennzeichnet, dass**
- eine Düse (62) vorgesehen ist, aus der in den Kühlraum (21) ein Trägerfluid ausströmt, das ein Absinken von Proben verhindert und mit dem die Proben horizontal durch den Kühlraum (21) der Kühleinrichtung (20) bewegbar sind.

14. Vorrichtung nach Anspruch 13, bei der der Tropfengenerator (10) und die Kühleinrichtung (20) so angeordnet sind, dass für die Proben vom Tropfengenerator (10) zum und/oder durch den Kühlraum (21) eine vorbestimmte Bewegungsbahn aufgespannt wird.

15. Vorrichtung nach Anspruch 13 oder 14, bei der zwischen dem Tropfengenerator (10) und der Aufnahmeeinrichtung (40) eine Ablenkeinrichtung (30) vorgesehen ist, mit der Proben in verschiedene Kompartimente (41) der Aufnahmeeinrichtung (40) lenkbar sind.

16. Vorrichtung nach Anspruch 15, bei der die Ablenkeinrichtung (30) zur Ausübung von mechanischen, elektrischen, magnetischen, akustischen und/oder optischen Ablenkkräften eingerichtet ist.

17. Vorrichtung nach Anspruch 15 oder 16, bei der die Ablenkeinrichtung (30) zwischen der Kühleinrichtung (20) und der Aufnahmeeinrichtung (40) angeordnet ist.

18. Vorrichtung nach einem der Ansprüche 13 bis 17, bei der ein Strömungsgenerator (60) vorgesehen ist, mit dem der Bewegungszustand der Proben im Kühlraum (21) durch Ausübung von Strömungskräften oder akustischen Kräften geändert werden kann.

19. Vorrichtung nach einem der Ansprüche 13 bis 18, bei der die Kühleinrichtung (20) mit einer Depositionseinrichtung (52) zur Auftragung einer Beschichtung auf die Proben ausgestattet ist.

20. Vorrichtung nach einem der Ansprüche 13 bis 19, bei der ein Tropfenmanipulator (50) vorgesehen ist, mit dem die flüssigen Proben vor der Abkühlung in Teiltropfen zerlegbar sind.

21. Vorrichtung nach einem der Ansprüche 13 bis 20, bei der der Tropfengenerator (10) einen mehrkomponentigen Düsenaufbau aufweist.

22. Vorrichtung nach einem der Ansprüche 13 bis 21, bei der die Kühleinrichtung (20) als fluides Kühlmedium Dampf des flüssigen Stickstoffs oder gekühlte Luft enthält.

23. Vorrichtung nach einem der Ansprüche 13 bis 22, bei der der Tropfengenerator (10) eine Vorkühleinrichtung aufweist.

## Claims

1. Method for the production of frozen samples (1-9), in particular for the cryoconservation of biological samples, with the steps:
• providing liquid samples using a drop generator (10),
• cooling the samples in a cooling chamber (21) of a cooling device (20) with a coolant until the samples freeze at least on their surface, and
• collecting the samples in a receiving device (40), wherein
• the samples are frozen in the cooling device (20) with a gaseous or vaporous coolant,
**characterised in that**
• the samples are moved horizontally through the cooling chamber (21) of the cooling device (20) with a carrier fluid, which flows out of a nozzle (62) into the cooling chamber (21) and which prevents the samples from sinking.

2. Method according to claim 1, in which the samples are moved from the drop generator (10) along a predetermined path of movement to the and/or through the cooling device (20).

3. Method according to claim 1 or 2, in which before collection the samples run through a deflection means (30), with which the samples are directed into different compartments (41) of the receiving device (40).

4. Method according to claim 3, in which the samples are exposed to mechanical, electrical, magnetic, acoustic and/or optical deflection forces in the deflection means (30).

5. Method according to claim 3 or 4, in which the samples run through the deflection means (30) after cooling.

6. Method according to one of the preceding claims, in which a coating is applied to the samples in the cooling device (20) with a coating device (52).

7. Method according to one of the preceding claims, in which before cooling the liquid samples are broken down into part-droplets using a drop manipulator (50).

8. Method according to one of the preceding claims, in which multi-component drops are generated with the drop generator (10).

9. Method according to one of the preceding claims, in which the samples contain biological cells, cells groups, cell constituents or biological macromolecules.

10. Method according to one of the preceding claims, in which vapour of liquid nitrogen is used as coolant.

11. Method according to one of the preceding claims, in which the samples are pre-cooled in the drop generator (10).

12. Method according to one of the preceding claims, in which the samples form a spherical drop shape under the action of their own surface tension.

13. Device for the production of frozen samples (1-9), in particular a cryoconservation device for biological samples, which comprises:
• a drop generator (10) for providing liquid samples in drop form,
• a cooling device (20), with which the samples can be cooled until at least the surface of the sample freezes, and
• a receiving device (40) for collecting the frozen samples, wherein
• the cooling device (20) has a cooling chamber (21) to receive a gaseous or vaporous coolant and the samples,
**characterised in that**
• a nozzle (62) is provided, from which a carrier fluid, which prevents samples from sinking and with which the samples can be moved horizontally through the cooling chamber (21) of the cooling device (20), flows into the cooling chamber (21).

14. Device according to claim 13, in which the drop generator (10) and the cooling device (20) are arranged so that a predetermined path of movement to and/or through the cooling chamber (21) can be set for the samples by the drop generator (10).

15. Device according to claim 13 or 14, in which a deflection means (30), with which samples can be directed into different compartments (41) of the receiving device (40), is provided between the drop generator (10) and the receiving device (40).

16. Device according to claim 15, in which the deflection device (30) is fitted to exert mechanical, electrical, magnetic, acoustic and/or optical deflection forces.

17. Device according to claim 15 or 16, in which the deflection device (30) is arranged between the cooling device (20) and the receiving device (40).

18. Device according to one of claims 13 to 17, in which a flow generator (60) is provided, with which the movement status of the samples in the cooling chamber (21) can be changed by exerting flow forces or acoustic forces.

19. Device according to one of claims 13 to 18, in which the cooling device (20) is equipped with a deposition device (52) to apply a coating to the samples.

20. Device according to one of claims 13 to 19, in which a drop manipulator (50) is provided, with which the liquid samples can be broken down into part-droplets before cooling.

21. Device according to one of claims 13 to 20, in which the drop generator (10) has a multi-component nozzle structure.

22. Device according to one of claims 13 to 21, in which the cooling device (20) contains vapour of liquid nitrogen or cooled air as fluid coolant.

23. Device according to one of claims 13 to 22, in which the drop generator (10) has a pre-cooling device.

## Revendications

1. Procédé de préparation d'échantillons congelés (1-9), en particulier en vue de la cryoconservation d'échantillons biologiques, comprenant les étapes consistant à :
- préparer des échantillons liquides au moyen d'un générateur de gouttes (10),
- refroidir les échantillons dans une enceinte frigorifique (21) d'un système de réfrigération (20) au moyen d'un agent de refroidissement jusqu'à ce que les échantillons soient congelés au moins en surface, et
- récupérer les échantillons dans un dispositif récepteur (40), où
- les échantillons sont congelés dans le système de réfrigération (20) au moyen d'un agent de refroidissement gazeux ou à l'état de vapeur,
**caractérisé en ce que**
- les échantillons sont transportés horizontalement à travers l'enceinte frigorifique (21) du système de réfrigération (20) au moyen d'un fluide porteur qui s'écoule depuis une buse (62) dans l'enceinte frigorifique (21) et qui empêche les échantillons de s'enfoncer.

2. Procédé selon la revendication 1, dans lequel les échantillons sont déplacés par le générateur de gouttes (10) le long d'un trajet de déplacement prédéterminé vers et / ou à travers le système de réfrigération (20).

3. Procédé selon la revendication 1 ou 2, dans lequel, avant d'être récupérés, les échantillons passent par un dispositif déflecteur (30) au moyen duquel les échantillons sont guidés vers des compartiments (41) différents du dispositif récepteur (40).

4. Procédé selon la revendication 3, dans lequel les échantillons sont exposés à des forces de déviation mécaniques, électriques, magnétiques, acoustiques et / ou optiques dans le dispositif déflecteur (30).

5. Procédé selon la revendication 3 ou 4, dans lequel les échantillons passent par le dispositif déflecteur (30) après avoir été réfrigérés.

6. Procédé selon l'une quelconque des revendications précédentes, dans lequel, dans le système de réfrigération (20), un revêtement est déposé sur les échantillons au moyen d'un dispositif de revêtement (52).

7. Procédé selon l'une quelconque des revendications précédentes, dans lequel, avant d'être réfrigérés, les échantillons liquides sont décomposés en parties de gouttes au moyen d'un manipulateur de gouttes (50).

8. Procédé selon l'une quelconque des revendications précédentes, dans lequel des gouttes à plusieurs composants sont produites au moyen du générateur de gouttes (10).

9. Procédé selon l'une quelconque des revendications précédentes, dans lequel les échantillons contiennent des cellules biologiques, des groupes de cellules, des constituants cellulaires ou des macromolécules biologiques.

10. Procédé selon l'une quelconque des revendications précédentes, dans lequel de la vapeur d'azote liquide est utilisée comme agent de refroidissement.

11. Procédé selon l'une quelconque des revendications précédentes, dans lequel les échantillons sont pré-refroidis dans le générateur de gouttes (10).

12. Procédé selon l'une quelconque des revendications précédentes, dans lequel les échantillons forment des gouttes sphériques sous l'action de leur tension superficielle propre.

13. Dispositif de préparation d'échantillons congelés (1-9), en particulier dispositif de cryoconservation d'échantillons biologiques, comprenant :
- un générateur de gouttes (10) pour préparer des échantillons liquides sous forme de gouttes,
- un système de réfrigération (20) permettant de réfrigérer les échantillons jusqu'à ce que l'échantillon soit congelé au moins en surface, et
- un dispositif récepteur (40) pour récupérer les échantillons congelés, où
- le système de réfrigération (20) présent une enceinte frigorifique (21) destinée à recevoir un agent de refroidissement gazeux ou à l'état de vapeur ainsi que les échantillons,
**caractérisé en ce que**
- il est prévu une buse (62) à partir de laquelle un fluide porteur qui empêche les échantillons de s'enfoncer et qui sert à transporter les échantillons horizontalement à travers l'enceinte frigorifique (21) du système de réfrigération (20) s'écoule dans l'enceinte frigorifique (21).

14. Dispositif selon la revendication 13, dans lequel le générateur de gouttes (10) et le système de réfrigération (20) sont disposés de façon à ce que les échantillons, passant du générateur de gouttes (10) vers et / ou à travers l'enceinte frigorifique (21), suivent un trajet de déplacement prédéterminé.

15. Dispositif selon la revendication 13 ou 14, dans lequel il est prévu entre le générateur de gouttes (10) et le dispositif récepteur (40) un dispositif déflecteur (30) qui permet de guider les échantillons vers des compartiments (41) différents du dispositif récepteur (40).

16. Dispositif selon la revendication 15, dans lequel le dispositif déflecteur (30) est conçu pour exercer des forces de déviation mécaniques, électriques, magnétiques, acoustiques et / ou optiques.

17. Dispositif selon la revendication 15 ou 16, dans lequel le dispositif déflecteur (30) est disposé entre le système de réfrigération (20) et le dispositif récepteur (40).

18. Dispositif selon l'une des revendications 13 à 17, dans lequel il est prévu un générateur d'écoulement (60) qui permet de modifier l'état de déplacement des échantillons dans l'enceinte frigorifique (21) en exerçant des forces fluidiques ou des forces acoustiques.

19. Dispositif selon l'une des revendications 13 à 18, dans lequel le système de réfrigération (20) est équipé d'un dispositif applicateur (52) servant à déposer un revêtement sur les échantillons.

20. Dispositif selon l'une des revendications 13 à 19, dans lequel il est prévu un manipulateur de gouttes (50) qui permet de décomposer les échantillons liquides en parties de gouttes avant qu'ils soient réfrigérés.

21. Dispositif selon l'une des revendications 13 à 20, dans lequel le générateur de gouttes (10) présente un agencement de buses multicomposants.

22. Dispositif selon l'une des revendications 13 à 21, dans lequel le système de réfrigération (20) contient de la vapeur d'azote liquide ou de l'air refroidi comme agent de refroidissement.

23. Dispositif selon l'une des revendications 13 à 22, dans lequel le générateur de gouttes (10) présente un dispositif de pré-refroidissement.
